# EUROPEAN PATENT APPLICATION

(11) **EP 2 093 967 A2**
(43) Date of publication of application: **26.08.2009**
(21) Application number: 08006430.6
(22) Date of filing: 31.03.2008
(51) Int. Cl.: H04L 29/06

(54) **Systems and methods for advertising insertion notification in a real-time streaming media service**

(30) Priority: 22.02.2008 US 36180
(71) Applicant: Qualcomm Incorporated, San Diego, CA 92121-1714 (US)
(72) Inventor: Gupta, Binita, San Diego, CA 92121-1714 (US)
(74) Representative: Heselberger, Johannes

(57) **Abstract**

Aspects provide for an advertising insertion notification in real-time streaming media services, which provides for advertisement insertion at the wireless device level. The advertising insertion notification is generated at the broadcaster level and transmitted to the wireless devices in the real-time stream prior to the occurrence of an advertisement slot. The advertising insertion notification notifies the wireless device of the start time and duration of an advertisement insertion slot.

In some aspects, the advertising insertion notification may indicate the source of the advertisements, such as from local wireless device storage, a dedicated advertisement channel or the like. Additionally, in some other aspects, the advertising insertion notification may include advertisement selection criteria that may be used to determine which advertisement should be inserted in the associated advertisement insertion slot.

## Description

### BACKROUND

### Field

The described aspects relate to wireless communication, and more particularly, to methods, systems and apparatus for notifying wireless devices of a forthcoming advertising insertion slot in a real-time streaming media service.

### Background

Wireless communication networks have been designed to deliver media content to recipients. For example, wireless communication networks may comprise a broadcast or multicast system, which transmit information to multiple recipients at the same time. In addition to delivering real-time broadcast programming, these types of media distribution systems are especially suited for the delivery and presentation of advertising media content, otherwise referred to as advertisements or ads, to wireless communication devices, such as cellular telephones and the like.

In non real-time broadcast environments, in which programming is broadcasted to wireless devices and stored for subsequent playback on the device, advertisements may be included within the non real-time broadcast content or predetermined advertisement slots may be inserted in the non-real-time broadcast content. In the instance in which the non real-time broadcast content includes predetermined advertisement slots the occurrence of a slot may trigger an application or program to determine which advertisement to include in the slot. The advertisements that are run during a non-real time broadcast may be stored locally on the wireless device or the wireless device may be required to obtain the advertisement from a network database. In non-real time broadcast the determination of which advertisements to present is not generally time dependent because the broadcast content is stored on the device as opposed to real-time content that is streamed.

However, advertisement insertion in real-time broadcast programming is different in that in many instances the advertisement slots are determined on-the-fly based on the dynamic nature of the real-time content and efficient determination of the advertisements to be inserted is important because the advertisement slots are finite in nature.

For example, if the real-time broadcast programming is a sporting event or some other live event, the occurrence of an advertisement slot may be randomly defined based on the flow of the event and thus, the occurrence of a slot is not determined until moments before the advertising slot exists. This random, on-the-fly occurrence of advertising slots in real-time broadcast generally do not pose a problem if the determination as to what advertisement is to be inserted is made at the network or broadcaster level. Such as in the case with conventional television broadcasts in which the broadcaster is able to change to an appropriate advertisement source when the spontaneous occurrence of an advertisement slot occurs.

However, wireless devices may pose a unique problem in terms of inserting advertisements in real-time broadcast transmissions because the advertisements that are to be inserted in the ad-hoc advertising slots may be stored locally on the wireless device as opposed to inserted at the network level. Local storage of advertisements provides for device-specific personalized advertisements based on user demographics, preferences or the like. In this scenario, the decision as to which advertisement to display may occur at the wireless device level as opposed to the network or broadcaster level. If the occurrence of an advertising slot within a real-time transmission itself triggers the determination of the advertisement, the determination time may not be properly accounted for in the advertisement slot, which has a finite duration in the real-time environment. Thus, if the occurrence of a an advertisement slot in a real-time broadcast triggers the ad determination process, synchronization problems may exist in trying to insert advertisements of a finite length in a finite advertisement slot due to the unknown duration of the advertisement determination process.

In addition, while local storage of advertisements on the wireless device may be possible, in other instances local storage may not be available or the broadcaster may desire to provide the advertisements from another source in lieu of the locally stored advertisements. In this regard, the broadcasters may desire to choose between advertisements stored on the device and advertisements available from another spot on an ad slot-by-ad slot basis. This would mean that certain advertisement slots could be designated for locally stored advertisements while other advertising slots could be designated for another source, such as a dedicated advertisement channel or the like. In the instance in which a dedicated advertisement channel is the source, the broadcaster may still desire to choose which dedicated advertisement channel to tune to insert advertisements in the advertisement slots on a wireless device-by-wireless device basis. This means that for a given advertisement slot, different wireless devices could be viewing different dedicated advertisement channels based on wireless device user demographics, profiles, preferences or any other factor. In this regard, the determination as to which dedicated advertisement channel will be tuned to for a given advertisement slot is often conducted at the wireless device level to insure efficiency, accommodate user preferences and limit network overhead.

Therefore, a need exists to develop systems, methods and apparatus for inserting advertisements in real-time streaming media service. Specifically, a need exists to insure that the insertion of advertisements in real-time streaming media service at the wireless device level occurs efficiently without adding any delay to the process. In addition, the desired advertisement insertion systems, methods and apparatus should support customization/targeting of advertising on a wireless device-by-wireless device basis. This would mean, that each wireless device receiving the real-time broadcast content could be showing a different advertisement in any given time slot based on user demographics, profile preferences or the like. As such, the desired systems, methods and apparatus should support insertion of advertisements from multiple sources, such as locally stored advertisements and dedicated linear advertisement channels. The systems, methods and apparatus should allow for the determination as to which source to use for a given advertisement slot to occur on a slot-by-slot basis.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented *infra.*

Thus, present aspects provide systems, methods and apparatus for an advertising insertion notification in real-time streaming media services. The advertisement notification is generated at the broadcaster level and communicated to the wireless devices in the real-time stream prior to the occurrence of an advertisement slot. The advertising insertion notification notifies the wireless device of the start time and duration of an advertisement insertion slot. In some aspects, the advertising insertion notification may indicate the source of the advertisements, such as from local wireless device storage, a dedicated advertisement channel or the like. Additionally, in some other aspects, the advertising insertion notification may include advertisement selection criteria that may be used to determine which advertisement or advertisements should be selected for the associated advertisement insertion slot. As such, present aspects allow for advertisements to be inserted in real-time streaming media service in an efficient manner that allows for customization and/or targeting of the advertisements without adding delay to the process. The aspects herein described provide for the advertisement source to be defined on a slot-by-slot basis and for advertisement determination to occur at the wireless device on a slot-by-slot basis.

In one aspect, a method is defined for generating and communicating an advertising insertion notification in a real-time streaming media service. The method includes receiving an indication of at least one impending advertising insertion slot in a real-time streaming media service, generating an advertising insertion notification for the at least one impending advertising insertion slot; and transmitting the advertising insertion notification to a plurality of wireless devices as part of the real-time streaming media service.

In one aspect of the method, receiving an indication of impending advertising insertion slots may include receiving the indication dynamically based on a content provider determination of the impending advertising insertion slot. In such aspects, the indications may occur on an as-needed basis based on perceived impending breaks in the real-time broadcast content. In another aspect of the method, receiving an indication of impending advertising insertion slots may include receiving the indication for more than one predetermined advertising slots that occur at predetermined intervals within the real-time streaming media flow. In this aspect, the advertising insertion notifications may be transmitted just prior to each predetermined advertising slot or the advertising insertion notification may be a composite notification transmitted prior to the first predetermined advertising slot.

In one aspect of the method, generating an advertising insertion notification further includes generating an advertising insertion notification that is operable to insert advertisements from at least one of a wireless device memory or a dedicated advertisement channel. In this regard, the advertising insertion notification may include a source identifier operable to identify a source, such as the wireless device memory or a dedicated advertisement channel, for the advertisement(s) that are to be presented in the associated advertising insertion slot(s).

Further, generating an advertising insertion notification may include generating an advertising insertion notification that includes a starting advertisement slot identifier operable to identify the start of the advertising insertion slot and identify the duration of the advertising insertion slot. The duration of the advertisement insertion slot may be defined based on the underlying communication system specific unit of time.

In yet a further aspect of the method, generating an advertising insertion notification may further include generating an advertising insertion notification that includes a list of advertising selection characteristics. The advertisement selection criteria may include, but is not limited to, an advertising category, targeted advertising demographics, targeted advertising location or targeted advertising time of day. In this regard, the advertising selection criteria may be used by the receiving wireless device to determine which advertisement or advertisements should be selected from memory for presentation during the advertisement insertion slot. In other related aspects of the method, generating an advertising insertion notification may further include generating an advertising insertion notification that includes a list of advertisement channels. In this regard, the list of dedicated advertisement channels may be used to determine which channel the wireless device should tune to for presentation of advertisements during the advertisement insertion slot.

A related aspect is provided for by at least one processor configured to generate and transmit an advertising insertion notification. The processor includes a first module for receiving an indication of at least one impending advertising insertion slot in a real-time streaming media service, a second module for generating an advertising insertion notification for the at least one impending advertising insertion slot; and a third module for transmitting the advertising insertion notification to a plurality of wireless devices as part of the real-time streaming media service.

Another related aspect is defined by a computer program product that includes a computer-readable medium. The medium includes at least one instruction for causing a computer to receive an indication of at least one impending advertising insertion slot in a real-time streaming media service, at least one instruction for causing the computer to generate an advertising insertion notification for the at least one impending advertising insertion slot and at least one instruction for causing the computer to transmit the advertising insertion notification to a plurality of wireless devices as part of the real-time streaming media service.

A further related aspect is provided for by an apparatus. The apparatus includes means for receiving an indication of at least one impending advertising insertion slot in a real-time streaming media service, means for generating an advertising insertion notification for the at least one impending advertising insertion slot and means for transmitting the advertising insertion notification to a plurality of wireless devices as part of the real-time streaming media service.

Yet another related aspect includes a network device for generating and transmitting an advertising insertion notification. The network device includes a computer platform that includes at least one processor and a memory. The network device additionally includes an advertising insertion notification generator stored in the memory and executable by the at least one processor. The advertising insertion notification generator is operable to receive an indication of at least one impending advertising insertion slot in a real-time streaming media service and generate an advertising insertion notification for the at least one impending advertising insertion slot. The network device additionally includes a real-time streaming media service stored in the memory and executable by the at least processor. The real-time streaming media service is operable to transmit the advertising insertion notification to a plurality of wireless devices.

Another aspect is defined by a method for receiving an advertising insertion notification in a real-time streaming media service and inserting advertising based on the notification. The method includes receiving, at a wireless device, an advertising insertion notification transmitted as part of a real-time streaming media service. The advertising insertion notification identifies at least one impending advertising insertion slot in the real-time streaming media service. The method also includes selecting one or more advertisements for insertion in the at least one impending advertising slots based on the advertising insertion notification and executing the selected one or more advertisements in the at least one advertising slot of the real-time streaming media service.

In one aspect, the method may further include determining a source for selecting the advertisements to be inserted in the advertising insertion slots based on an identifier in the advertising insertion notification. Determining a source may include determining that either wireless device memory or a dedicated advertisement channel is the source based on indicator in the advertising insertion notification.

In one aspect of the method selecting one or more advertisements for insertion may include selecting from wireless device memory one or more advertisements for insertion based on a match between metadata associated with the advertisements in the wireless device memory and a list of advertising selection characteristics received in the advertising insertion notification. In an alternate aspect of the method, selecting one or more advertisements for insertion may include selecting a dedicated advertisement channel for retuning based on a match between metadata associated with the dedicated advertisement channels and a list of dedicated advertisement characteristics received in the advertising insertion notification. In such aspects, executing the selected one or more advertisements further comprises retuning the real time streaming media service to the selected dedicated advertisement channel.

A related aspect is provided for by at least one processor configured to receive an advertising insertion notification and insert advertising based on the notification. The processor includes a first module for receiving, at a wireless device, an advertising insertion notification transmitted as part of a real-time streaming media service. The advertising insertion notification identifies at least one impending advertising insertion slot in the real-time streaming media service. The processor additionally includes a second module for selecting one or more advertisements for insertion in the at least one impending advertising slots based on the advertising insertion notification and a third module for executing the selected one or more advertisements in the at least one advertising slot of the real-time streaming media service.

Another related aspect is defined by a computer program product that includes a computer-readable medium. The medium includes at least one instruction for causing a computer to receive, at a wireless device, an advertising insertion notification transmitted as part of a real-time streaming media service. The advertising insertion notification identifies at least one impending advertising insertion slot in the real-time streaming media service. The medium additionally includes at least one instruction for causing the computer to select one or more advertisements for insertion in the at least one impending advertising slots based on the advertising insertion notification and at least one instruction for causing the computer to execute the selected one or more advertisements in the at least one advertising slot of the real-time streaming media service.

An apparatus provides for a further related aspect. The apparatus includes means for receiving, at a wireless device, an advertising insertion notification transmitted as part of a real-time streaming media service. The advertising insertion notification identifies at least one impending advertising insertion slot in the real-time streaming media service. The apparatus additionally includes means for selecting one or more advertisements for insertion in the at least one impending advertising slots based on the advertising insertion notification and means for executing the selected one or more advertisements in the at least one advertising slot of the real-time streaming media service.

Yet another related aspect is defined by a wireless communication device for receiving an advertising insertion notification and inserting advertising based on the notification. The wireless communication device includes a computer platform including at least one processor and a memory. The wireless device additionally includes an advertising insertion module stored in the memory and executable by the at least one processor. The advertising insertion module includes an advertising insertion notification receiver operable to receive an advertising insertion notification from a real-time streaming media service. The advertising insertion notification identifies at least one impending advertising insertion slot in the real-time streaming media service. The advertising insertion module additionally includes an advertisement selector operable to select one or more advertisements for insertion in the at least one impending advertising slot based on the advertising insertion notification and an advertisement executor operable to execute the selected one or more advertisements in the at least one advertising slot of the real-time streaming media service.

Thus, present aspects provide systems, methods and apparatus for an advertising insertion notification in real-time streaming media services. The advertisement notification is generated at the broadcaster level and transmitted to the wireless devices in the real-time stream prior to the occurrence of an advertisement slot. The advertising insertion notification notifies the wireless device of the start time and duration of an advertisement insertion slot. In some aspects, the advertising insertion notification may indicate the source of the advertisements, such as from local wireless device storage, a dedicated advertisement channel or the like. Additionally, in some other aspects, the advertising insertion notification may include advertisement selection criteria that may be used to determine which advertisement or advertisements should be selected for the associated advertisement insertion slot. As such, present aspects allow for advertisements to be inserted in real-time streaming media service in an efficient manner that allows for customization and/or targeting of the advertisements without adding delay to the overall insertion process. The aspects herein described provide for the advertisement source to be defined on a slot-by-slot basis and for advertisement determination to occur at the wireless device level on a slot-by-slot basis.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:
Fig. 1 is a schematic diagram of a system for advertising insertion in a real-time streaming media service, according to an aspect;
Fig. 2 is a block diagram of an example of an advertising insertion notification, according to an aspect;
Fig. 3 is a block diagram of a network device for generating and transmitting advertising insertion notifications, according to an aspect;
Fig. 4 is a block diagram of a wireless device for receiving an advertising insertion notification and inserting advertising in advertisement slots of the real-time streaming media service in accordance with the notification, according to a further aspect;
Fig. 5 is a flow diagram of a method for receiving an advertising insertion notification and inserting advertising in advertisement slots of the real-time streaming media service in accordance with the notification, according to a further aspect;
Fig. 6 is a flow diagram of a method for generating and transmitting an advertising insertion notification;
Fig. 7 is a flow diagram of another method for receiving an advertising insertion notification and inserting advertising in advertisement slots of the real-time streaming media service in accordance with the notification, according to an aspect;
Fig. 8 is a flow diagram of an apparatus for generating and transmitting an advertising insertion notification; and
Fig. 9 is a flow diagram of another apparatus for receiving an advertising insertion notification and inserting advertising in advertisement slots of the real-time streaming media service in accordance with the notification, according to an aspect.

### DETAILED DESCRIPTION

The present devices, apparatus, methods, computer-readable media and process ors now will be described more fully hereinafter with reference to the accompanying drawings, in which aspects of the invention are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the invention to those skilled in the art. Like numeric designators in the figures and the detailed description refer to like elements throughout.

The various aspects described herein are in connection with a wireless communication device. A wireless communication device can also be called a subscriber station, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Present aspects provide systems, methods and apparatus for inserting advertising in real-time streaming media services by way of an advertising insertion notification. The advertising insertion notification is generated at the broadcaster level and communicated to the wireless devices in the real-time stream prior to the occurrence of an advertisement slot. The advertising insertion notification notifies the wireless device of the start time and duration of an advertisement insertion slot. In some aspects, the advertising insertion notification may indicate the source of the advertisements, such as from local wireless device storage, a dedicated advertisement channel or the like. Additionally, in some other aspects, the advertising insertion notification may include advertisement selection criteria that may be used to determine which advertisement or advertisements should be selected for the associated advertisement insertion slot. As such, present aspects allow for advertisements to be inserted in real-time streaming media service in an efficient manner that allows for customization and/or targeting of the advertisements without adding delay to the process. The aspects herein described provide for the advertisement source to be defined on a slot-by-slot basis and for advertisement determination to occur at the wireless device on a slot-by-slot basis.

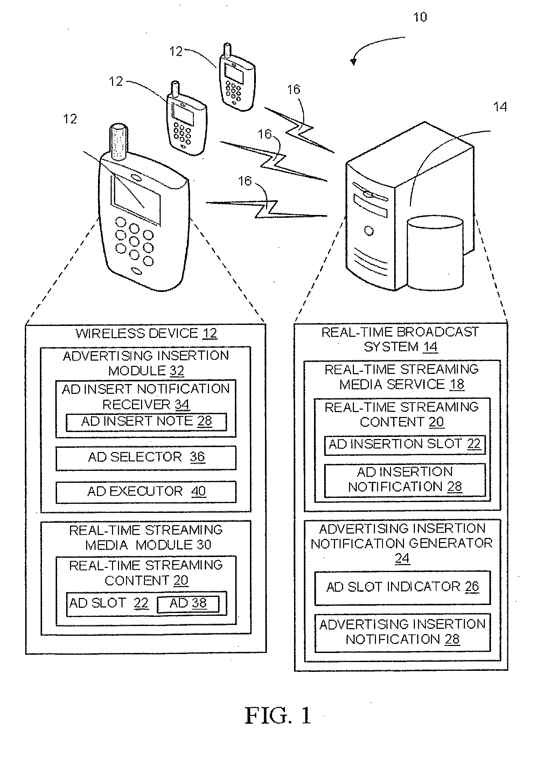

Fig. 1 provides a high-level schematic overview of a system for inserting advertisements in a real-time streaming media service. The advertising insertion system **10** includes a plurality of wireless devices **12** and a real-time broadcast system **14** that is operable to deliver real-time media content across wireless broadcast network **16**. The wireless device may be any device operable to receive broadcast content, including, but not limited to, cellular telephones, audio/MP3 players, personal data assistants (PDAs), portable computers, gaming devices and the like.

The real-time broadcast system **14** includes a real-time streaming media service **18** operable to deliver real-time streaming media content **20** across a plurality of channels. The real-time streaming media content **20** may include one or more advertising insertion slots **22**. The advertising insertion slots **22** allow the content provider to provide advertising to the wireless devices in conjunction with the real-time media content **20**. The advertising insertion slots **22** may be predetermined slots that occur at predetermined periods throughout a real-time content presentation. For example, for a specified real-time media content program advertising insertion slots may be predetermined to occur once every ten minutes for a two-minute interval. In other aspects, the advertising insertion slots **22** may be dynamically defined to correlate with the dynamic nature of the real-time media content. For example, a live event, such as a sporting event or the like, may dictate that the advertising insertion slots be dynamically defined, on-the-fly due to the unpredictable nature of the live event. In such instances, the broadcast content provider may be responsible for identifying the start and duration of an advertising insertion slot within the real-time streaming media content. It should also be noted that an advertising insertion slot **22** may accommodate the insertion of a single advertisement or multiple advertisements depending on the duration of the advertising insertion slot **22** and the duration of the advertisements.

The real-time broadcast system **14** additionally includes an advertising insertion notification generator **24** operable to generate advertising insertion notifications. The advertising insertion notification generator **24** is operable to receive an advertising slot indicator **26** that indicates that an ad slot is impending in the real-time streaming media content, which requires the generation of an advertising insertion notification **28**. As previously noted, advertising insertion slots **22** may be predetermined prior to the start of a real-time broadcast or determined dynamically on an as-needed basis throughout a real-time broadcast. Thus, the corresponding advertising slot indicators **26** may occur at predetermined intervals or the slot indicators **26** may occur dynamically on an as-needed basis.

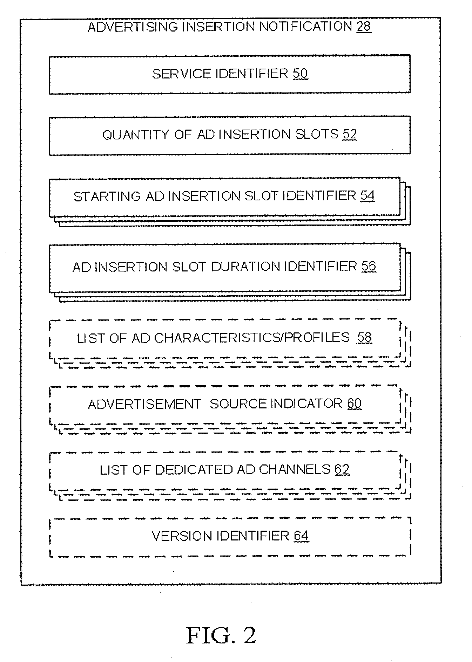

Once the advertising insertion notification generator **24** receives the indicator **26**, the advertising insertion notification **28** is generated. The advertising insertion notification **28** will define the corresponding advertising insertion slot **22** or advertising insertion slots. In some aspects, each notification **28** will correspond to a single advertising insertion slot **22**. However, in other aspects, the notification may correspond to multiple advertising insertion slots **22**, such as in the instance in which the advertising slots are predetermined in advance. The advertising insertion may be defined in terms of a service/channel, a start time and duration. Fig. 2, which will be described in detail *infra.* provides a detailed example of the parameters that may be included within the advertising insertion notification **28**.

Once the advertising insertion notification **28** is generated, the notification is transmitted to the plurality of the wireless devices as part of the real-time streaming media service. In some aspects, the advertising insertion notification **28** is transmitted in the real-time stream as part of a logical channel designated for overhead information.

In most aspects, the advertising insertion notification **28** is generated and transmitted a short period of time, such as a few seconds, prior to the occurrence of the corresponding advertising insertion slot **22**. This is to insure timely and efficient selection of advertisements on the wireless device end. In other aspects, in which the advertising insertion notification **28** corresponds to multiple advertising insertion slots **22**, the notification **28** may be generated and transmitted a short period of time, such as a few seconds, prior to the occurrence of the first advertising insertion slot defined in the notification.

The wireless devices **12** include a real-time streaming media module **30** operable to receive the real-time streaming media content **20** that includes the advertising insertion slots **22**. Thus, the wireless devices include an advertising insertion module **32** that is operable to insert advertisements in the advertising insertion slots **22**. The advertising insertion module includes an advertising insertion notification receiver **34** operable to receive the advertising insertion notifications transmitted from the real-time broadcast system **14**. As previously noted, the advertising insertion notifications may be transmitted as part of the logical channel carrying overhead information in real-time streaming media broadcast.

The advertising insertion module **32** additionally includes an advertisement selector **36** operable to select the one or more advertisements for presentation in the corresponding advertising insertion slot **22**. In one aspect, the one or more advertisements may be selected from advertisements 38 that are optionally stored locally on the wireless device. In other aspects, the selection of the one or more advertisements **38** may correspond to selection of a dedicated advertisement channel that the device may re-tune to during the advertising insertion slot **22**. Additionally, selection of the one or more advertisements may provide for correlation between an advertisement targeted for the slot and advertisements available for presentation. Advertisements targeted for the slot may be based on one or more advertising or user characteristic, such as, but not limited to, a category of advertisements, the wireless device user's profile, the wireless device user's preference, the location of the wireless device, the time of day and the like. As such, the advertising insertion notification may, in some aspects, include a list of advertising selection characteristics used to select the advertising. In other aspects, the advertising selection characteristics may be preconfigured on the wireless device.

The advertising insertion module **32** additionally includes an advertisement executor **40** operable to execute the selected advertisements on the wireless device **12**. In some aspects, in which selection of the one or more advertisements **38** is from local memory, execution of the advertisement(s) may include retrieving the selected one or more advertisements from memory and presenting the one or more advertisements in the corresponding advertisement slot **22**. In other aspects, in which selection of the one or more advertisements **38** is based on selection of a dedicated advertisement channel, execution of the advertisement(s) may include tuning to the appropriate dedicated advertisement channel during the advertising slot and re-tuning back to the media content channel after the duration of the advertising insertion slot **22** is over.

Fig. 2 provides a block diagram of an exemplary advertising insertion notification **28**. The advertising insertion notification **28** includes a service identifier **50** that identifies the service/channel in which the advertisement is to be inserted. The service identifier maps to a corresponding real-time streaming content channel and, thus, may also be referred to as a channel identifier. It should be noted that service/channel may have multiple flows and, as such, the advertising insertion notification may include a flow identifier (not shown in Fig. 2) in those instances in which the advertising insertion only applies to specific flows.

The advertising insertion notification **28** may include a quantity of advertising insertion slot parameter **52** operable to identify the number of advertising insertion slots **22** in the advertising insertion notification **28**. As previously noted, the advertising insertion notification may provide for one-to-one correlation between notification and slot or the notification may correspond to more than one advertising insertion slots. In those aspects in which the advertising notification system only provides for each notification corresponding to a single insertion slot, the quantity of advertising insertion slot parameter **52** will be set to a value of "1" or the like.

The advertising insertion notification **28** includes a starting insertion slot identifier parameter **54** operable to identify the start of each advertising insertion slot in the notification. Additionally, the advertising insertion notification **28** includes an insertion slot duration identifier parameter **56** operable to identify the duration of each advertising insertion slot in the notification.

Optionally, the advertising insertion notification **28** may additionally include one or more advertising characteristics **58** associated with each advertising slot in the notification. The advertising characteristics **58** define the selection criteria for determining which ad or ads may be presented in the associated advertising insertion slot **22**. Advertising characteristics may include, but are not limited to, the category and/or sub-category of the targeted advertisements for the advertising insertion slot, the user demographics targeted for the advertisement, the geographic location targeted for the advertisement, the preferred time of day/week/month/year for the advertisement and the like. The determination of which advertisement to select is based on a match between the metadata associated with available advertisements and the one or more advertising characteristics **58**. In some aspects, the advertising characteristics **58** may be presented in a prioritized list such that the highest listed characteristic must be matched first before considering the next highest characteristic on the list. In other aspects, in which the list is not prioritized, the advertisement(s) determined to have the closest match from among the listed advertising characteristics may be presented.

In some aspects, the advertising characteristics **58** may not be included within the advertising insertion notification **28**. In those aspects in which the advertisement selection characteristics are not included in the notification, the advertising selection characteristics may be preconfigured on the wireless device or may be determined locally on the device based on user's profile/preferences. Alternatively, the advertising insertion module **32** may implement another selection scheme based on other selection criteria or the selection of the advertisement to be presented may be random.

Optionally, the advertising insertion notification **28** may additionally include one or more advertisement source indicators **60** associated with each advertising slot in the notification. The source indicator **60** provides for indication of which advertisement source to use for the corresponding advertising insertion slot. For example, the wireless device may store advertisements locally in device memory and, additionally, the wireless device may have access to one or more dedicated advertisement channels. Dedicated linear feed advertisement channels provide for the real-time streaming media content to be tuned to the advertisement channel during the advertisement insertion slot and retuned to the streaming media content after the duration of the advertisement insertion slot is over. By providing for a source indicator **60** in each notification and/or for each insertion slot in the notification, the source of the advertisements can be defined on a slot-by-slot basis. This means that for a given real-time streaming program, the source of advertisements for one advertising slot may differ from the source of advertisements for a subsequent slot.

The dedicated advertisement channel or some other source of advertisements may be the fallback source if the wireless device does not support local storage of advertisements, regardless of the source indicator indicating otherwise. This provides for source deviation amongst different wireless devices receiving the same real-time media content service. For example, devices that support local storage of advertisements select advertisements from the local storage, while devices that do not support local storage of advertisements are able to select a dedicated advertisement channel as the source. Additionally, according to some aspects, the advertisement insertion system may be configured such that the source of the advertisements is limited to a single source, such as wireless device memory, dedicated channel or the like. In these aspects, the need to include a source indicator 60 is obviated by the single source configuration.

Optionally, the advertising insertion notification **28** may additionally include one or more dedicated linear feed advertisement channels **62** associated with each advertising slot in the notification. The dedicated advertisement channels **62** may be used to select advertising if the notification indicates that the dedicated channels are the source, the wireless device does not support local storage of advertisements, the advertisement insertion system is configured such that the dedicated channels are the only source or otherwise. A list of dedicated advertisement channels **62** may be provided, as each dedicated channel will generally be associated with a different advertisement category. For example, one dedicated advertisement channel may run sports-related advertisements; a second dedicated advertisement channel may run fashion-related advertisements, etc. Metadata associated with each dedicated advertisement channel serves to identify the category and any other characteristics, such as targeted demographics for the channel, targeted geographic are for the channel and the like.

In those aspects in which the advertising insertion notification includes advertising characteristics **58**, the advertising insertion module **32** may be operable to compare the advertising characteristics **58** to the metadata associated with the list of advertisement channels **62** to select the advertisement channel that will be tuned to insert advertisements in the specified insertion slot **22**. In those aspects in which the advertising characteristics **58** are presented in a prioritized list, the highest listed characteristic must be matched with dedicated advertisement channels first before considering the next highest characteristic on the list. In other aspects, in which the list is not prioritized, the advertisement channel determined to have the closest match from among the listed advertising characteristics may be presented. In other aspects, in which no advertisement selection characteristics **58** are presented in the advertising insertion notification or are otherwise available to the device, the listing of dedicated advertisement channels may be prioritized by the content provider, such that the highest listed and available dedicated advertisement channel is presented as a default.

Optionally, the advertising insertion notification may include a version indicator **64** operable to identify the version, otherwise referred to as the revision, of the advertising insertion notification. In some aspects, the advertising insertion notification may be updated prior to the conclusion of the duration of at least one of the insertion slots associated with the notification. Updatable information includes, but is not limited to, the starting advertisement insertion identifier **54**, advertisement insertion slot duration identifier 56, ad characteristics **58** and any other control data requiring update/change. The updated advertising insertion notification may additional provide for removing expired advertisement insertion slots and/or adding of new advertisement insertion slots (i.e., slots that have added since the previous notification was sent). The version indicator **64** provides the advertising insertion module **32** on the wireless devices **12** with notification that a change/update has occurred. It should be noted that the advertising insertion notification can be updated prior to the occurrence of the first advertising insertion slot associated with the notification up to the conclusion of the duration of the last in time associated advertising insertion slot.

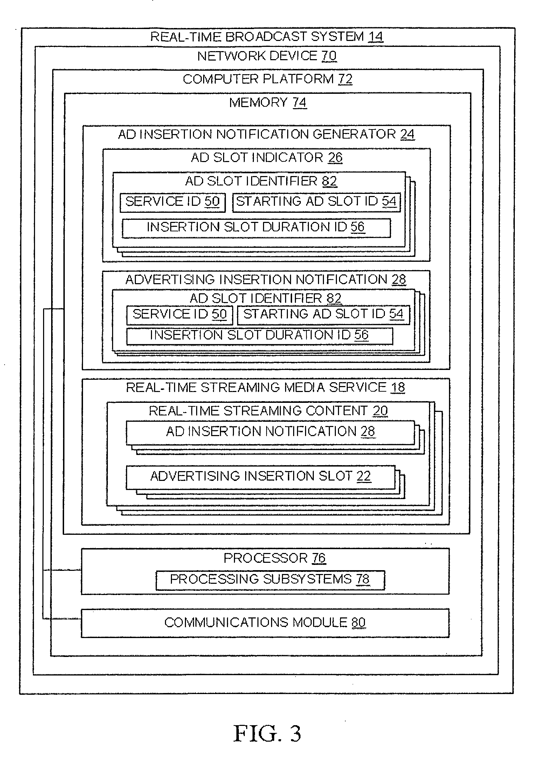

Referring to Fig. 3, according to another aspect, a detailed block diagram is illustrated of network device **70** in a real-time broadcast system **14** for generating and transmitting advertising insertion notifications is provided. The network device **70** may comprise at least one of any type of hardware, server, personal computer, mini computer, mainframe computer, or any computing device either special purpose or general computing device. Further, the modules and applications described herein as being operated on or executed by the network device **70** may be executed entirely on the network device **70** or alternatively, in other aspects, separate servers or computer devices may work in concert to provide data in usable formats to parties, and/or to provide a separate layer of control in the data flow between the wireless devices **12** and the modules and applications executed by network device **70**.

The network device **70** includes computer platform **72** that can transmit and receive data across a wired or wireless network, and that can execute routines and applications. Computer platform **72** includes a memory **74**, which may comprise volatile and nonvolatile memory such as read-only and/or random-access memory (RAM and ROM), EPROM, EEPROM, flash cards, or any memory common to computer platforms. Further, memory **74** may include one or more flash memory cells, or may be any secondary or tertiary storage device, such as magnetic media, optical media, tape, or soft or hard disk.

Further, computer platform **72** also includes a processor **76**, which may be an application-specific integrated circuit (ASIC), or other chipset, logic circuit, or other data processing device. Processor **76** includes various processing subsystems **78** embodied in hardware, firmware, software, and combinations thereof, that enable the functionality of network device **70** and the operability of the network device on a wired and/or wireless network. For example, processing subsystems **78** may allow for initiating and maintaining communications, and exchanging data, with other networked devices. For the disclosed aspects, processing subsystems **78** of processor **76** may include any subsystem components that interact with the advertising insertion notification generator **24**.

The computer platform **72** further includes a communications module **80** embodied in hardware, firmware, software, and combinations thereof, that enables communications among the various components of network device **70**, as well as between the network device **70** and wireless devices **12**. The communication module **80** may include the requisite hardware, firmware, software and/or combinations thereof for establishing a wireless communication connection. The communication module **80** is operable to transmit the real-time streaming media content and the advertising insertion notifications as part of the real-time streaming media service.

The memory **74** of network device **70** includes a real-time streaming media service **18** operable to deliver real-time streaming media content **20** across a plurality of channels. The real-time streaming media content **20** may include one or more advertising insertion slots **22**. The advertising insertion slots **22** allow the content provider to provide advertising to the wireless devices in conjunction with the real-time media content **20**. The advertising insertion slots **22** may be predetermined slots that occur at predetermined periods throughout a real-time content presentation. For example, for a specified real-time media content program, advertising insertion slots may be predetermined to occur once every ten minutes with each insertion slot being two-minutes in length. In other aspects, the advertising insertion slots **22** may be dynamically defined to correlate with the dynamic nature of the real-time media content. For example, a live event, such as a sporting event or the like, may dictate that the advertising insertion slots be dynamically defined, on-the-fly due to the unpredictable nature of the live event. In such instances, the broadcast content provider may be responsible for identifying the start and duration of an advertising insertion slot within the real-time streaming media content. Additionally, while ad insertion slots **22** are herein described as slots that interrupt the regular real-time media streaming content, it is also possible to configure advertising insertion slots **22** that provide for advertising insertion in conjunction with the regular real-time media streaming content. For example, the advertising insertion slot may provide for the advertisement to be presented in a split-screen display along with the real-time streaming media content or as banner or edge type advertisement that is presented along with the regular real-time media streaming content. Such aspects provide for the advertisements to be inserted without interrupting the real-time streaming media service. The network device **70** of real-time broadcast system **14** additionally includes an advertising insertion notification generator **24** operable to generate advertising insertion notifications. The advertising insertion notification generator **24** is operable to receive an advertising slot indicator **26** that indicates that an ad slot is impending in the real-time streaming media content, which requires the generation of an advertising insertion notification **28**. As previously noted, advertising insertion slots **22** may be predetermined prior to the start of a real-time broadcast or determined dynamically on an as-needed basis throughout a real-time broadcast. At a minimum, the indicator **26** includes one or more advertising slot identifiers **82**, which, in some aspects, includes the service identifier **50**, starting ad insertion slot identifier **52** and ad insertion slot duration identifier **54** for each ad slot being identified.

The advertising insertion notification generator **24** is operable to generate notification **28** based on receipt of advertising insertion slot indicator **26**. The advertising insertion notification **28** includes one or advertising slot identifiers **82**, which, in some aspects, includes the service identifier **50**, starting insertion slot identifier **52** and insertion slot duration identifier **54** for each slot being identified. As previously note, in some aspects, each notification **28** will correspond to a single advertising insertion slot **22**. However, in other aspects, the notification may correspond to multiple advertising insertion slots **22**, such as in the instance in which the advertising slots are predetermined in advance. Fig. 2 provides a detailed example of the additional parameter and control data that may be included within the advertising insertion notification **28**.

Upon generation, the advertising insertion notification **28** is transmitted to the plurality of the wireless devices as part of the real-time streaming media service. As previously noted, in some aspects, the advertising insertion notification **28** is transmitted as part of logical channel designated for carrying overhead information in the real-time stream. In most aspects, the advertising insertion notification **28** is generated and transmitted a short period of time, such as a few seconds, prior to the occurrence of the corresponding advertising insertion slot **22**. This is to insure timely and efficient selection of advertisements on the wireless device end. In other aspects, in which the advertising insertion notification **28** corresponds to multiple advertising insertion slots **22**, the notification **28** may be generated and transmitted a short period of time, such as a few seconds, prior to the occurrence of the first advertising insertion slot defined in the notification.

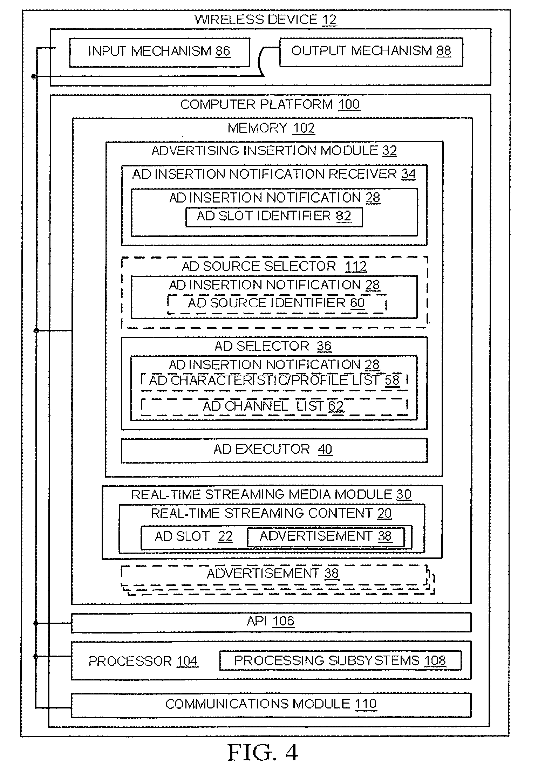

Referring to Fig. 4, according to one aspect, a detailed block diagram representation of wireless device **12** operable to receive advertising insertion notifications and insert advertising in real-time streaming media content according to the notification is depicted. The wireless device **12** may include any type of computerized, communication device configured to receive real-time streaming broadcast content, such as cellular telephone, Personal Digital Assistant (PDA), two-way text pager, portable computer, and even a separate computer platform that has a wireless communications portal, and which also may have a wired connection to a network or the Internet. The wireless device can be a remote-slave, or other device that does not have an end-user thereof but simply communicates data across the wireless network, such as remote sensors, diagnostic tools, data relays, and the like. The present apparatus and methods for receiving advertising insertion notifications and insert advertising in real-time streaming media content according to the notification can accordingly be performed on any form of wireless device or wireless computer module, including a wireless communication portal, including without limitation, wireless modems, PCMCIA cards, access terminals, desktop computers or any combination or sub-combination thereof.

The wireless device **12** includes computer platform **100** that can transmit and receive data across a wireless network, and that can execute routines and applications. Computer platform **100** includes memory **102**, which may comprise volatile and nonvolatile memory such as read-only and/or random-access memory (RAM and ROM), EPROM, EEPROM, flash cards, or any memory common to computer platforms. Further, memory **102** may include one or more flash memory cells, or may be any secondary or tertiary storage device, such as magnetic media, optical media, tape, or soft or hard disk. Further, computer platform **100** also includes processor **104**, which may be an application-specific integrated circuit ("ASIC"), or other chipset, processor, logic circuit, or other data processing device. Processor **104** may execute an application programming interface ("API") layer **106** that interfaces with any resident programs, such as advertising insertion module **32** and real-time streaming media module **30**, stored in the memory **102** of wireless device **12**. API **106** is typically a runtime environment executing on the respective wireless device. One such runtime environment is Binary Runtime Environment for Wireless^{®} (BREW^{®}) software developed by Qualcomm, Inc., of San Diego, California. Other runtime environments may be utilized that, for example, operate to control the execution of applications on wireless computing devices.

Processor **104** includes various processing subsystems **108** embodied in hardware, firmware, software, and combinations thereof, that enable the functionality of wireless device **12** and the operability of the device on a wireless network. For example, processing subsystems **108** allow for initiating and maintaining communications, and exchanging data, with other networked devices. In aspects in which the communication device is defined as a cellular telephone the communications processor **104** may additionally include one or a combination of processing subsystems **108**, such as: sound, nonvolatile memory, file system, transmit, receive, searcher, layer 1, layer 2, layer 3, main control, remote procedure, handset, power management, digital signal processor, messaging, call manager, Bluetooth^{®} system, Bluetooth^{®} LPOS, position engine, user interface, sleep, data services, security, authentication, USIM/SIM, voice services, graphics, USB, multimedia such as MPEG, GPRS, *etc* (all of which are not individually depicted in Fig. 2 for the sake of clarity). For the disclosed aspects, processing subsystems **108** of processor **104** may include any subsystem components that interact with the real-time streaming media module **30** and/or advertising insertion module **32**.

The computer platform **100** of wireless device **12** includes communications module **110** operable for receiving real time streaming media services and, as such, the advertising insertion notifications broadcasted over the real-time streaming media service. The communications module **110** may additionally be operable for tuning the real-time broadcast to a dedicated advertisement channel and re-tuning to the real-time streaming media service after the duration of the advertising insertion slot.

The memory **102** of computer platform **100** also includes a real-time streaming media module **30** operable to receive the real-time streaming media content **20** that includes the advertising insertion slots **22** that are used to present advertisements **38**. Additionally, the memory of computer platform **100** includes advertising insertion module **32** that is operable to insert advertisements in the advertising insertion slots **22**.

The advertising insertion module includes an advertising insertion notification receiver **34** operable to receive the advertising insertion notifications **28** transmitted from the real-time broadcast system **14**. As previously noted, the advertising insertion notifications **28** may be transmitted as part of a logical channel carrying overhead information in the real-time streaming media broadcast. The advertising insertion notification **28** includes an advertising slot identifier **82** which, in some aspects, includes the service identifier **50** (not shown in Fig. 4), starting insertion slot identifier **52** (not shown in Fig. 4) and insertion slot duration identifier **54** (not shown in Fig. 4) for each slot being identified.

Optionally, the advertising insertion module **32** additionally includes an advertisement source selector **112** operable to select the source of the advertisements **38** for presentation in the corresponding advertising insertion slot **22**. In some aspects, the advertising insertion notification **28** may include an advertising source indicator **60** that identifies the source of the advertisements **38**, such as the wireless device memory, a dedicated advertisement channel or the like. In instances in which the advertising insertion notification **28** includes an advertising source indicator **60**, the source of the advertisements may be selected on a slot-by-slot basis (*i.e.,* each notification may identify a different source and each slot identified in a multiple slot notification may have a different source). In other aspects, the advertising insertion system may be configured such that the source of the advertisements is predetermined, such that all advertisements are selected from the predetermined source, such as the wireless device memory, a dedicated advertisement channel or the like. In such aspects, in which the source of the advertisements is preconfigured on the wireless device, the need to include a source indicator **60** in the notification **28** is obviated.

The advertising insertion module **32** additionally includes an advertisement selector **36** operable to select the one or more advertisements for presentation in the corresponding advertising insertion slot **22**. Selection of the one or more advertisements may provide for correlation between an advertisement targeted for the slot and advertisements available for presentation (e.g., stored in local memory and/or available from dedicated advertisement channels). Advertisements targeted for the slot may be based on one or more advertising or user characteristic, such as, but not limited to, a category/sub-category of advertisements, the wireless device user's profile, the wireless device user's preference, the location of the wireless device, the time of day and the like.

As such, the advertising insertion notification may, in some aspects, include a list of advertising selection characteristics/profile **58** used to select the advertising. The one or more advertising characteristics **58** are associated with each advertising slot in the notification. The advertising characteristics **58** define the selection criteria for determining which ad may be presented in the associated advertising insertion slot **22**. Advertising characteristics may include, but are not limited to, the category and/or sub-category of the targeted advertisement for the advertising insertion slot, the user demographics targeted for the advertisement, the geographic location targeted for the advertisement, the preferred time of day/week/month/year for the advertisement and the like. The determination of which advertisement or advertisements to select is based on a match between the metadata associated with available advertisements and the one or more advertising characteristics **58**. In some aspects, the advertising characteristics **58** may be presented in a prioritized list such that the highest listed characteristic must be matched first before considering the next highest characteristic on the list. In other aspects, in which the list is not prioritized, the advertisement determined to have the closest match from among the listed advertising characteristics may be presented. In other aspects in which the advertising selection characteristics **58** may or may be included in the advertising insertion notification **28**, the advertising selection characteristics may be preconfigured in wireless device memory.

In other aspects, the advertising insertion notification may include a list of dedicated advertisement channels **62** used to select the advertising according to characteristics of the dedicated channel. Based on source selection, pre-configured information, and/or the inability of a specific wireless device to support local advertisement storage, dedicated linear feed advertisement channels **62** may be associated with each advertising slot in the notification. Each dedicated channel will generally be associated with a different advertisement category. For example, one dedicated advertisement channel may run sports-related advertisements, a second dedicated advertisement channel may run fashion-related advertisements, and the like. Metadata associated with each dedicated advertisement channel serves to identify the category and any other characteristics for advertisements carried on that channel, such as targeted demographics, and the like.

In those aspects in which the advertising insertion notification includes advertising characteristics **58**, the advertising insertion module **32** may be operable to compare the advertising characteristics **58** to the metadata associated with the list of advertisement channels **62** to select the advertisement channel that will be tuned to inserts advertisements in the specified insertion slot **22**. In those aspects in which the advertising characteristics **58** are presented in a prioritized list, the highest listed characteristic must be matched with dedicated advertisement channels first before considering the next highest characteristic on the list. In other aspects, in which the list is not prioritized, the advertisement channel determined to have the closest match from among the listed advertising characteristics may be presented. In other aspects, in which no advertisement selection characteristics **58** are presented in the advertising insertion notification or are otherwise available to the device, the listing of dedicated advertisement channels may be prioritized by the content provider and pre-configured on the device, such that the highest listed and available dedicated advertisement channel is selected for presentation by default.

The advertising insertion module **32** additionally includes an advertisement executor **40** operable to execute the selected advertisement(s) on the wireless device **12**. In some aspects, in which selection of the one or more advertisements 38 is from local memory, execution of the advertisement(s) may include retrieving the selected one or more advertisements from memory and presenting the one or more advertisements in the corresponding advertisement slot **22**. In other aspects, in which selection of the one or more advertisements **38** is based on selection of a dedicated advertisement channel, execution of the advertisement(s) may include tuning to the appropriate dedicated advertisement channel during the advertising slot and re-tuning to the media content channel after the duration of the advertising insertion slot **22** is over.

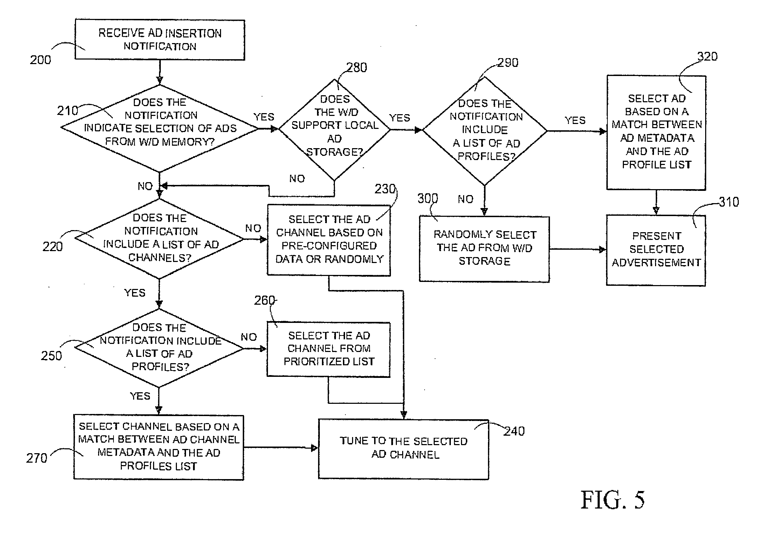

According to another aspect, Fig. 5 is a flow diagram representing a method for receiving an advertising insertion notification and inserting advertisements in the real-time streaming media service in accordance with the notification. At Event **200**, the wireless device receives an advertising insertion notification as part of the real-time streaming media service. In most aspects, the advertising insertion notification is transmitted and received by the wireless device a short period of time (e.g. a few seconds) prior to the occurrence of the advertising insertion slot. This is to insure the efficient and timely determination of advertisements to be inserted in the ad insertion slots.

At Decision **210**, a determination is made as to whether the notification indicates selection of the advertisements from wireless device memory. In this regard, the notification may include a source indicator that is enabled to indicate the selection of the advertisements from wireless device memory. Alternatively, the advertisement insertion system may be configured such that selection of advertisements is limited to selection of a dedicated advertisement channel. If the advertising insertion notification indicates that selection of the advertisements is not from local wireless device memory, at Decision **220**, a determination is made as to whether the notification includes a list of dedicated advertisement channels. If the advertising insertion notification does not include a list of one or more advertisement channels the, at Event **230**, the wireless device may choose an available dedicated advertisement channel based on any available pre-configured information on the device or randomly (if no information is pre-configured on the device), and at Event **240**, the wireless device is tuned to the selected advertisement channel for the duration of the advertising insertion slot.

If the determination is made that the notification does include a list of one or more advertisement channels, at Decision **250**, a determination is made as to whether the notification includes a list of advertisement selection characteristics or if the wireless device has other access to advertisement selection characteristics defined by the broadcast service. If the determination is made that the notification does not include advertisement selection characteristics and the device has no other access to advertisement selection characteristics the, at Event **260**, the advertisement channel is selected from the prioritized list of channels in the notification or, if the list is not prioritized, based on pre-configured information on the device or randomly from the list of channels, and, at Event **240**, the wireless device is tuned to the selected advertisement channel for the duration of the advertising insertion slot.

If the determination is made that the notification does include advertisement selection characteristics/profiles then, at Event **270**, a channel is selected based on match between the advertising characteristic/profiles and metadata associated with the list of advertisement channels. If the advertising characteristics/profiles are prioritized then a match of the highest priority characteristic must be determined before proceeding to a match of the next highest priority characteristic. If the advertising characteristics/profiles are not prioritized then the advertisement channel is selected based on a closest match determination from all available advertisement channels. Once the advertisement channel is selected, at Event **240**, the wireless device is tuned to the selected advertisement channel for the duration of the advertising insertion slot.

If, at Decision **210**, a determination is made that notification indicates selection of advertisements from local wireless device memory then, at Decision **280**, a determination is made as to whether the wireless device supports local storage of advertisements or currently has advertisements in storage. If the determination is made that the device does not support advertisement storage or otherwise currently has no advertisements in storage the process flow returns to Decision **220**, and determination is made as to whether the notification includes a list of dedicated advertisement channels.

If a determination is made that the device supports local storage of advertisement and currently has advertisements in storage then, at Decision **290**, a determination is made as to whether the notification includes advertisement selection characteristics/profiles or if the wireless device has other access to advertisement selection characteristics defined by the broadcast service. If the determination is made that the notification does not include advertisement selection characteristics and the device has no other access to advertisement selection characteristics (*e.g*., based on the pre-configured information on the device or based on user's profile/preferences) the, at Event **300**, the wireless device may randomly select the advertisement or advertisements from wireless device storage. Once selected, at Event **310**, the selected advertisement(s) are presented in the advertisement insertion slot.

If the determination is made that the notification does include advertising characteristics/profiles or the device has other access to the advertisement selection characteristics then, at Event **320**, the wireless device selects the advertisements based on a match between the advertisement selection characteristics and metadata associated with the stored advertisements. If the advertising characteristics/profiles are prioritized then a match of the highest priority characteristic must be determined before proceeding to a match of the next highest priority characteristic. If the advertising characteristics/profiles are not prioritized then the advertisement is selected based on a closest match determination from all available advertisements. Once the advertisement(s) are selected, at Event **310**, the wireless device presents the selected advertisement(s) in the advertisement insertion slot.

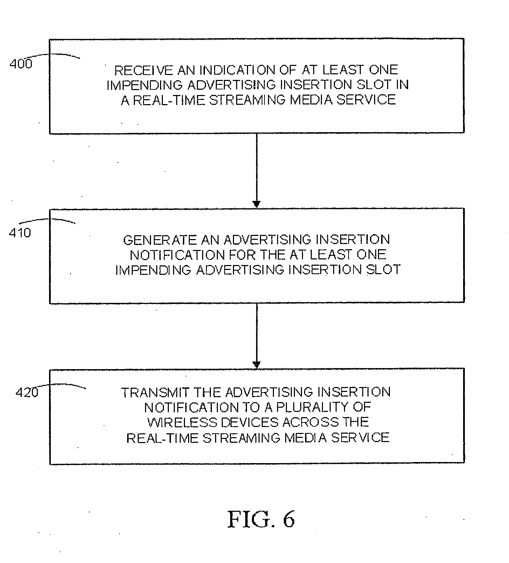

Fig. 6 is a flow diagram of a method for generating and transmitting advertising insertion notification in real-time streaming media content, according to another aspect. At Event **400**, the real-time broadcast system receives an indication of at least one impending advertising insertion slot in a real-time streaming media service. The indication includes an insertion slot identifier that may include service identification, a starting ad insertion slot identifier and an ad insertion duration identifier. The indication may be based on predetermined advertising insertion slots that generally occur at predetermined intervals. This type of indication is generally associated with real-time broadcast content that has predetermined breaks or provides for advertising insertion in the form of split-screen display and/or advertising banners. Alternatively, in other aspects, the indication may be based on dynamic advertising insertion slots that are created on an as-needed basis. This type of indication is generally associated with real-time broadcast that has ad hoc breaks, such as live events or the like.

At Event **410**, the real-time broadcast system generates an advertising insertion notification based on the received indication. The notification includes an insertion slot identifier that may include service identification, a starting ad insertion slot identifier and an ad insertion duration identifier. Additionally, the notification may optionally include an advertising source identifier that indicates wireless device memory and/or dedicated advertisement channels or the like as the advertisement source. Also, the notification may include a prioritized or non-prioritized advertisement selection characteristic/profile list and/or a prioritized or non-prioritized advertisement channel list that are used to select advertisements and/or advertisement channels.

At Event 420, the advertising insertion notification is transmitted to a plurality of wireless devices as part of the real-time streaming media service. The notification may be transmitted over a logical channel used to accommodate the transmission of overhead information in the real-time stream. The notification may be continuously transmitted until the end of the last-in-time insertion slot to accommodate devices that join the real-time streaming media service during the insertion slot duration.

Additionally, the method described in Fig. 6 may provide for updating the advertisement with revised control data, such as, but not limited to, ad insertion slot start times, ad insertion slot duration, selection criteria and the like. Additionally, the updated advertising insertion notification may provide for removing expired advertisement insertion slots and/or identification of new advertisement insertion slots. Updated versions of the notification may be generated and transmitted up to the completion of the duration of the last-in-time insertion slot associated with the notification.

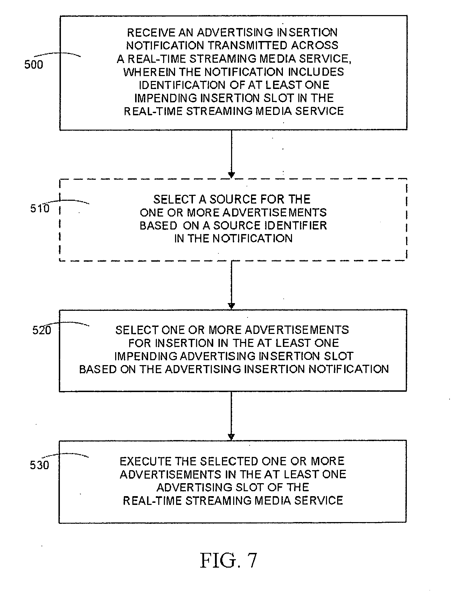

According to another aspect, Fig. 7 is a flow diagram of a method for receiving advertising insertion notifications at wireless devices and inserting advertisements in the real-time streaming media service in accordance with the notification. At Event 500, the wireless device receives an advertising notification transmitted as part of the real-time streaming media service. The notification includes identification of at least one impending advertising insertion slots within the real-time streaming media service.

At optional Event **510**, a source is selected for the one or more advertisements based on an optional source indicator in the notification. The source indicator may provide for selecting the advertisements from wireless device memory or for tuning the broadcast to a selected dedicated advertisement channel. In other aspects, the advertising insertion system may pre-configure the source of the advertisements, such that advertisements are preconfigured to be selected from device memory, a dedicated advertisement channel or any other source.

At Event **520**, one or more advertisements are selected for insertion in the at least one advertising insertion slot based on the notification. In one aspect, the notification may include a list of advertisement selection characteristics/profiles that are used as selection criteria or the device may have other access to advertising selection characteristics defined by the broadcast service. The advertisement selection characteristics may be used in selecting an advertisement from memory, a dedicated advisement channel or another source depending on the indicated or preconfigured source of the advertisements. The selection characteristics may be compared to metadata associated with the advertisements and/or the dedicated channels to determine a match or closest match to the selection characteristics.

At Event 530, the selected advertisement is executed on the wireless device in the advertisement insertion slot of the real-time streaming media service. Execution may entail retrieving the one or more advertisements from device memory and playing them in the insertion slots or tuning to the selected dedicated advertisement channel for the duration of the insertion slot.

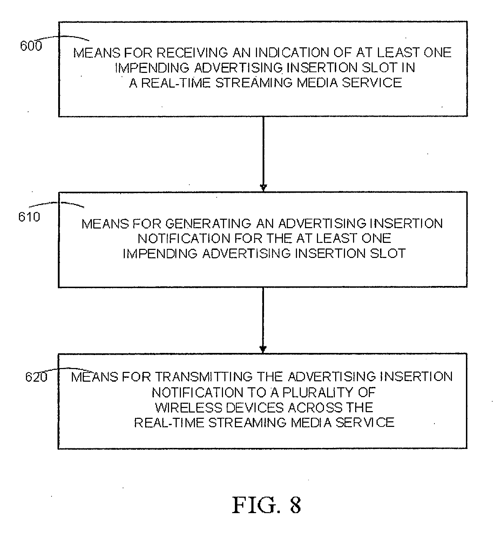

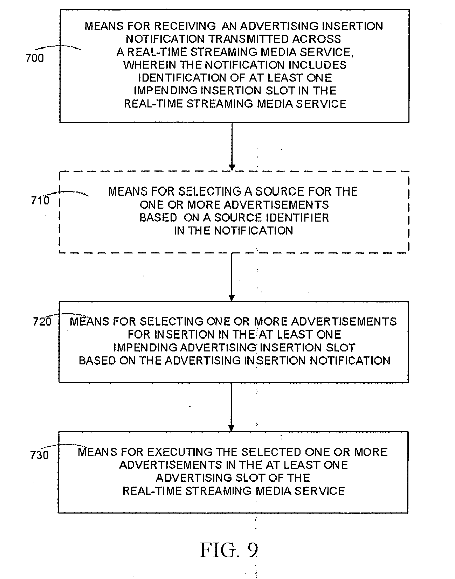

The method of Fig. 6 and Fig. 7 described above may be performed by the corresponding apparatus illustrated in Fig. 8 and Fig. 9, respectively.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Thus, present aspects provide systems, methods and apparatus for an advertising insertion notification in real-time streaming media services. The advertisement notification is generated at the broadcaster level and transmitted to the wireless devices in the real-time stream prior to the occurrence of an advertisement slot. The advertising insertion notification notifies the wireless device of the start time and duration of an advertisement insertion slot. In some aspects, the advertising insertion notification may indicate the source of the advertisements, such as from local wireless device storage, a dedicated advertisement channel or the like. Additionally, in some other aspects, the advertising insertion notification may include advertisement selection criteria that may be used to determine which advertisement should be inserted in the associated advertisement insertion slot. As such, present aspects allow for advertisements to be inserted in real-time streaming media service in an efficient manner that allows for customization and/or targeting of the advertisements without adding delay to the overall insertion process. The aspects herein described provide for the advertisement source to be defined on a slot-by-slot basis and for advertisement determination to occur at the wireless device level on a slot-by-slot basis.

Many modifications and other aspects will come to mind to one skilled in the art to which this invention pertains having the benefit of the teachings presented in the foregoing descriptions and the associated drawings. Therefore, it is to be understood that the aspect is not to be limited to the specific aspects disclosed and that modifications and other aspects are intended to be included within the scope of the appended claims. Although specific terms are employed herein, they are used in a generic and descriptive sense only and not for purposes of limitation. Accordingly, the described aspects are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for generating and communicating an advertising insertion notification in a real-time streaming media service, comprising:
receiving an indication of at least one impending advertising insertion slot in a real-time streaming media service;
generating an advertising insertion notification for the at least one impending advertising insertion slot; and
transmitting the advertising insertion notification to a plurality of wireless devices as part of the real-time streaming media service.

2. The method of claim 1, wherein receiving an indication further comprises receiving the indication for more than one predetermined advertising slots that occur at predetermined intervals within the real-time streaming media flow.

3. The method of claim 1, wherein receiving an indication further comprises receiving the indication dynamically based on a content provider determination of the impending advertising insertion slot.

4. The method of claim 1, wherein generating an advertising insertion notification further comprises generating an advertising insertion notification that includes a starting advertisement slot identifier operable to identify a start of an advertising insertion slot and an advertisement slot duration operable to identify a duration of the advertising insertion slot.

5. The method of claim 1, wherein generating an advertising insertion notification further comprises generating an advertising insertion notification that includes a service identifier operable to identify a real-time service in which advertisements are to be inserted.

6. The method of claim 5, wherein generating an advertising insertion notification further comprises generating an advertising insertion notification that includes a flow identifier operable to identify a flow within a real-time service where the advertisements are to be inserted.

7. The method of claim 1, wherein generating an advertising insertion notification further comprises generating an advertising insertion notification that provides advertisement insertion from at least one of a wireless device memory or a dedicated advertisement channel.

8. The method of claim 1, wherein generating an advertising insertion notification further comprises generating an advertising insertion notification that includes a list of advertising selection characteristics.

9. The method of claim 8, wherein generating an advertising insertion notification that includes a list of advertising selection characteristics further defines the advertising selection characteristics as at least one of an advertising category, targeted advertising demographics, targeted advertising location or targeted advertising time of day.

10. The method of claim 1, wherein generating an advertising insertion notification further comprises generating an advertising insertion notification that includes a list of advertisement channels.

11. The method of claim 1, wherein transmitting the advertising insertion notification further comprises transmitting the advertising insertion notification to the plurality of wireless devices as part of a logical channel used to carry overhead information in the real-time streaming media service.

12. The method of claim 1, wherein transmitting the advertising insertion notification further comprises transmitting the advertising insertion notification continuously until all of the advertising insertion slots associated with the notification have expired.

13. The method of claim 1, further comprising updating the advertising insertion notification prior to an expiration of at least one advertising insertion slots and transmitting the updated advertising insertion notification to the plurality of wireless devices as part of the real-time streaming media service.

14. The method of claim 13, wherein updating the advertising insertion notification further comprises updating the advertising insertion notification with at least one of removing of expired advertisement insertion slots and adding of newly identified advertisement insertion slots.

15. At least one processor configured to generate and transmit an advertising insertion notification, comprising:
a first module for receiving an indication of at least one impending advertising insertion slot in a real-time streaming media service;
a second module for generating an advertising insertion notification for the at least one impending advertising insertion slot; and
a third module for transmitting the advertising insertion notification to a plurality of wireless devices as part of the real-time streaming media service.

16. A computer program product, comprising:
a computer-readable medium comprising:
at least one instruction for causing a computer to receive an indication of at least one impending advertising insertion slot in a real-time streaming media service;
at least one instruction for causing the computer to generate an advertising insertion notification for the at least one impending advertising insertion slot; and
at least one instruction for causing the computer to transmit the advertising insertion notification to a plurality of wireless devices as part of the real-time streaming media service.

17. An apparatus, comprising:
means for receiving an indication of at least one impending advertising insertion slot in a real-time streaming media service;
means for generating an advertising insertion notification for the at least one impending advertising insertion slot; and
means for transmitting the advertising insertion notification to a plurality of wireless devices as part of the real-time streaming media service.

18. A network device for generating and transmitting an advertising insertion notification, comprising:
a computer platform including at least one processor and a memory;
an advertising insertion notification generator stored in the memory and executable by the at least one processor, wherein the adverting insertion notification generator is operable to receive an indication of at least one impending advertising insertion slot in a real-time streaming media service and generate an advertising insertion notification for the at least one impending advertising insertion slot; and
a real-time streaming media service stored in the memory and executable by the at least processor, wherein the real-time streaming media service is operable to transmit the advertising insertion notification to a plurality of wireless devices.

19. The network device of claim 18, wherein the advertising insertion notification generator is further operable to receive the indication for more than one predetermined advertising slots that occur at predetermined intervals within the real-time streaming media flow.

20. The network device of claim 18, wherein the advertising insertion notification generator is further operable to receive the indication dynamically based on a content provider determination of the impending advertising insertion slot.

21. The network device of claim 18, wherein the advertising insertion notification generator is further operable to generate the advertising insertion notification that includes a starting advertisement slot identifier operable to identify a start of an advertising slot and an advertisement slot duration operable to identify a duration of the advertising insertion slot.

22. The network device of claim 18, wherein the advertising insertion notification generator is further operable to generate an advertising insertion notification that includes a service identifier operable to identify a real-time service in which advertisements are to be inserted.

23. The network device of claim 22, wherein the advertising insertion notification is further operable to generate an advertising insertion notification that includes a flow identifier operable to identify a flow within the real-time service where the advertisements are to be inserted.

24. The network device of claim 18, wherein the advertising insertion notification generator is further operable to generate the advertising insertion notification that provides advertisement insertion from at least one of a wireless device memory or a dedicated advertisement channel.

25. The network device of claim 18, wherein the advertising insertion notification generator is further operable to generate an advertising insertion notification that includes a list of advertising selection characteristics.

26. The network device of claim 18, wherein the advertising insertion notification generator is further operable to generate an advertising insertion notification that includes a list of advertising selection characteristics chosen from the group of advertising selection characteristics consisting of an advertising category, targeted advertising demographics, targeted advertising location and targeted advertising time of day.

27. The network device of claim 18, wherein the advertising insertion notification generator is further operable to generate the advertising insertion notification that includes a list of advertisement channels.

28. The network device of claim 18, wherein the real-time streaming media service is further operable to transmit the advertising insertion notification to the plurality of wireless devices as part of a logical channel used to carry overhead information in the real-time streaming media service.

29. The network device of claim 18, wherein the real-time streaming media service is further operable to transmit the advertising insertion notification continuously until all of the advertising insertion slots associated with the notification have expired.

30. The network device of claim 18, wherein the advertising insertion notification generator is further operable to update the advertising insertion notification prior to an expiration of at least one advertising insertion slots and the real-time streaming media service is further operable to transmit the updated advertising insertion notification to the plurality of wireless devices.

31. The network device of claim 30, wherein the updated advertising insertion notification is further operable to provide for at least one of removing expired advertisement slots and adding newly identified advertisement insertion slots.

32. A method for receiving an advertising insertion notification and inserting advertising based on the notification, the method comprising:
receiving, at a wireless device, an advertising insertion notification transmitted as part of a real-time streaming media service, wherein the advertising insertion notification identifies at least one impending advertising insertion slot in the real-time streaming media service;
selecting one or more advertisements for insertion in the at least one impending advertising slots based on the advertising insertion notification; and
executing the selected one or more advertisements in the at least one advertising slot of the real-time streaming media service.

33. The method of claim 32, further comprising determining a source for selecting the advertisements to be inserted in the advertising insertion slots based on a source identifier received in the advertising insertion notification.

34. The method of claim 33, wherein determining a source for selecting the advertisements further comprises determining that either wireless device memory or a dedicated advertisement channel as the source of the advertisements based on an indicator in the advertising insertion notification

35. The method of claim 32, wherein selecting one or more advertisements for insertion further comprises selecting from wireless device memory one or more advertisements for insertion based on a match between metadata associated with the advertisements in the wireless device memory and a list of advertising selection characteristics provided in the advertising insertion notification.

36. The method of claim 32, wherein selecting one or more advertisements for insertion further comprises selecting from wireless device memory one or more advertisements for insertion based on a match between metadata associated with the advertisements in the wireless device memory and a list of advertising selection characteristics preconfigured in the wireless device or determined based on a user preference.

37. The method of claim 32, wherein selecting one or more advertisements for insertion further comprises selecting a channel from among a plurality of dedicated advertisement channels based on a match between metadata associated with each of the plurality of dedicated channels and a list of advertisement selection characteristics provided in the advertising insertion notification.

38. The method of claim 32, wherein selecting one or more advertisements for insertion further comprises selecting a channel from among a plurality of dedicated advertisement channels based on a match between metadata associated with each of the plurality of dedicated channels and a list of advertisement selection characteristics preconfigured on the wireless device or determined based on a user preference.

39. The method of claim 32, wherein executing the selected one or more advertisements further comprises retuning the real time streaming media service to the selected dedicated advertisement channel for a duration of the advertisement insertion slot.

40. The method of claim 32, further comprising receiving an updated version of the advertising insertion notification prior to the expiration of all of the identified advertising insertion slots.

41. The method of claim 40, further comprising updating advertising insertion control data on the wireless device based on the updated version of the advertising insertion notification.

42. The method of claim 40, further comprising removing expired advertisement insertion slots on the wireless device based on the updated version of the advertising insertion notification.

43. The method of claim 40, further comprising adding newly identified advertisement insertion slots on the wireless device based on the updated version of the advertising insertion notification.

44. The method of claim 32, wherein executing the selected one or more advertisements further comprises executing the selected one or more advertisements in the advertisement insertion slot concurrently with primary content delivered by the real-time streaming media service.

45. At least one processor configured to receive an advertising insertion notification and insert advertising based on the notification, comprising:
a first module for receiving, at a wireless device, an advertising insertion notification transmitted as part of a real-time streaming media service, wherein the advertising insertion notification identifies at least one impending advertising insertion slot in the real-time streaming media service;
a second module for selecting one or more advertisements for insertion in the at least one impending advertising slots based on the advertising insertion notification; and
a third module for executing the selected one or more advertisements in the at least one advertising slot of the real-time streaming media service.

46. A computer program product, comprising:
a computer-readable medium comprising:
at least one instruction for causing a computer to receive, at a wireless device, an advertising insertion notification transmitted as part of a real-time streaming media service, wherein the advertising insertion notification identifies at least one impending advertising insertion slot in the real-time streaming media service;
at least one instruction for causing the computer to select one or more advertisements for insertion in the at least one impending advertising slots based on the advertising insertion notification; and
at least one instruction for causing the computer to execute the selected one or more advertisements in the at least one advertising slot of the real-time streaming media service.

47. An apparatus, comprising:
means for receiving, at a wireless device, an advertising insertion notification transmitted as part of a real-time streaming media service, wherein the advertising insertion notification identifies at least one impending advertising insertion slot in the real-time streaming media service;
means for selecting one or more advertisements for insertion in the at least one impending advertising slots based on the advertising insertion notification; and
means for executing the selected one or more advertisements in the at least one advertising slot of the real-time streaming media service.

48. A wireless communication device for receiving an advertising insertion notification and inserting advertising based on the notification, comprising:
a computer platform including at least one processor and a memory; and
an advertising insertion module stored in the memory and executable by the at least one processor, wherein the advertising insertion module includes,
an advertising insertion notification receiver operable to receive an advertising insertion notification from a real-time streaming media service, wherein the advertising insertion notification identifies at least one impending advertising insertion slot in the real-time streaming media service,
an advertisement selector operable to select one or more advertisements for insertion in the at least one impending advertising slot based on the advertising insertion notification, and
an advertisement executor operable to execute the selected one or more advertisements in the at least one advertising slot of the real-time streaming media service.

49. The wireless device of claim 48, wherein the advertising insertion module further comprises an advertising source selector operable to select a source for advertisements to be inserted in the advertising insertion slots based on an identifier in the advertising insertion notification.

50. The wireless device of claim 49, wherein the advertising source selector is further operable to select either wireless device memory or a dedicated advertisement channel as the source of the advertisements based on an indicator in the advertising insertion notification

51. The wireless device of claim 48, wherein the advertisement selector is further operable to select from wireless device memory one or more advertisements for insertion based on match between metadata associated with the advertisements in the wireless device memory and a list of advertising selection characteristics provided in the advertising insertion notification.

52. The wireless device of claim 48, wherein the advertisement selector is further operable to select from wireless device memory one or more advertisements for insertion based on match between metadata associated with the advertisements in the wireless device memory and a list of advertising selection characteristics preconfigured in the wireless device or determined based on user preference.

53. The wireless device of claim 48, wherein the advertisement selector is further operable to select a channel from among a plurality of dedicated advertisement channels based on a match between metadata associated with each of the plurality of dedicated channels and a list of dedicated advertisement channel characteristics provided in the advertising insertion notification.

54. The wireless device of claim 48, wherein the advertisement selector is further operable to select a channel from among a plurality of dedicated advertisement channels based on a match between metadata associated with each of the plurality of dedicated channels and a list of dedicated advertisement channel characteristics preconfigured on the wireless device or determined based on user pref erence.

55. The wireless device of claim 48, wherein the advertisement executor is further operable to retune the real time streaming media service to the selected dedicated advertisement channel.

56. The wireless device of claim 48, wherein the advertising insertion notification receiver is further operable to receive the advertising insertion notification continuously until the expiration of all of the identified advertising insertion slots.

57. The wireless device of claim 48, wherein the advertising insertion notification receiver is further operable to receive an updated version of the advertising insertion notification prior to the expiration of all of the identified advertising insertion slots and update advertising insertion control data based on the updated version of the advertising insertion notification.

58. The wireless device of claim 57, wherein the advertising insertion notification receiver is further operable to update advertising insertion control data based on the updated version of the advertising insertion notification.

59. The wireless device of claim 57, wherein the advertising insertion notification receiver is further operable to remove expired advertisement insertion slots on the wireless device based on the updated version of the advertising insertion notification.

60. The wireless device of claim 57, wherein the advertising insertion notification receiver is further operable to add newly identified advertisement insertion slots on the wireless device based on the updated version of the advertising insertion notification.

61. The wireless device of claim 48, wherein the advertisement executor is further operable to execute the selected one or more advertisements in the at least one advertising slot concurrently with primary content delivered by the real-time streaming media service.
